# EUROPÄISCHE PATENTANMELDUNG

(11) **EP 2 320 115 A1**
(43) Veröffentlichungstag der Anmeldung: **11.05.2011**
(21) Anmeldenummer: 10190068.6
(22) Anmeldetag: 05.11.2010
(51) Int. Cl.: F16L 19/02, F16L 37/48

(54) **Verbindungseinrichtung zum Anschließen einer Wasserleitung eines Hausgeräts an einen Wasserhahn und Hausgerät mit einer Verbindungseinrichtung**

(30) Priorität: 10.11.2009 DE 102009046580
(71) Anmelder: BSH Bosch und Siemens Hausgeräte GmbH, 81739 München (DE)
(72) Erfinder: Lewy, Grzegorz, 10557, Berlin (DE)

(57) **Zusammenfassung**

Die Erfindung betrifft eine Verbindungseinrichtung (10) zum Anschließen einer Wasserleitung (12), insbesondere einer Wasserstopp-Einrichtung, eines Hausgeräts an einen Wasserhahn (13), mit einem an der Wasserleitung (12) fixierbaren Flanschelement (14), welches unter Vermittlung einer Dichtung (20) mit dem Wasserhahn (13) verbindbar ist und welches einen Aufnahmebereich (18) für ein freies Ende (17) der Wasserleitung (12) aufweist, und mit einer Überwurfmutter (11), welche auf einer Verbindungsseite (26) auf den Wasserhahn (13) aufschraubbar ist und mittels welcher das Flanschelement (14) an dem Wasserhahn (13) festlegbar ist, wobei die Überwurfmutter (11) auf einer der Verbindungsseite (26) abgewandten Seite (27) den Aufnahmebereich (18) des Flanschelements (14) überragt. Die Erfindung betrifft auch ein Hausgerät.

## Beschreibung

Die Erfindung betrifft eine Verbindungseinrichtung zum Anschließen einer Wasserleitung, insbesondere einer Wasserstopp-Einrichtung (auch unter der Bezeichnung "Aquastop" bekannt), eines Hausgeräts an einen Wasserhahn. Die Verbindungseinrichtung umfasst ein an der Wasserleitung fixierbares Flanschelement, welches unter Vermittlung einer Dichtung mit dem Wasserhahn verbindbar ist und welches einen Aufnahmebereich für ein freies Ende der Wasserleitung aufweist. Die Verbindungseinrichtung umfasst auch eine Kupplung, welche auf einer Verbindungsseite mit dem Wasserhahn verbindbar, vorzugsweise auf den Wasserhahn aufschraubbar, ist und mittels welcher das Flanschelement an dem Wasserhahn festlegbar ist. Die Erfindung bezieht sich außerdem auf ein Hausgerät mit einer solchen Verbindungseinrichtung.

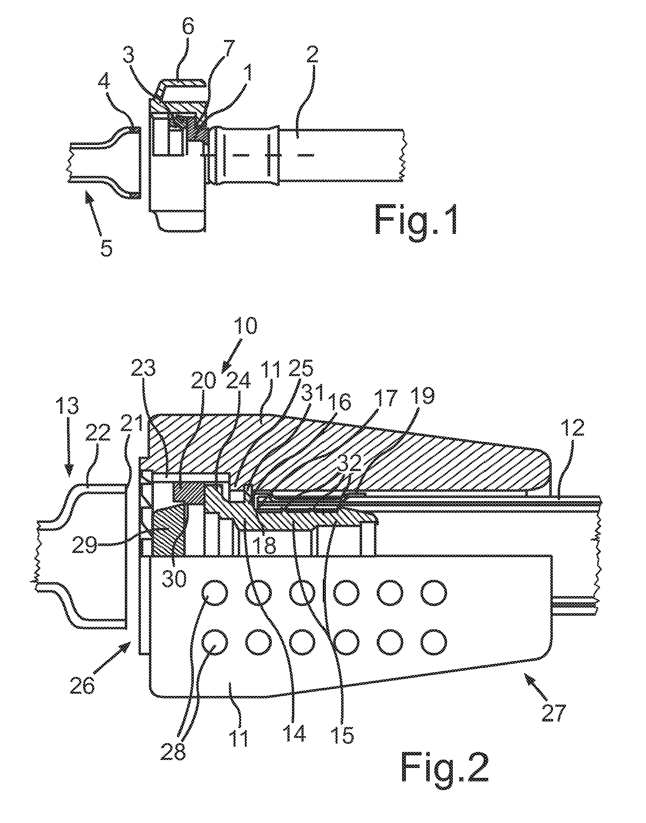

Verbindungseinrichtungen zum Anschließen einer Wasserleitung einer Wasserstopp-Einrichtung an einen Wasserhahn sind aus dem Stand der Technik in vielfältiger Ausgestaltung bekannt. Im Weiteren wird unter einem Wasserhahn jede Ausführungs-Art eines Anschlusses mit einem Hauswasserversorgungsnetzes verstanden, an dem mittels einer Kupplung eine Wasserleitung anschließbar ist. Dabei haben der Anschluss und die Kupplung vorzugsweise jeweils ein korrespondierendes schraubenförmiges Gewinde. Fig. 1 zeigt in schematischer Darstellung einen Längsschnitt durch eine bekannte Verbindungseinrichtung. Sie umfasst ein Flanschelement 1, an welchem ein Wasserschlauch 2 montiert ist. Der Wasserschlauch 2 ist auf das Flanschelement 1 aufgeschoben. Das Flanschelement 1 wird über einen Dichtungsring 3 mit einem korrespondierenden Flansch 4 eines Wasserhahnes 5 verbunden. Und zwar wird das Flanschelement 1 an dem Flansch 4 des Wasserhahnes 5 mit Hilfe Kupplung in Form einer Überwurfmutter 6 festgelegt. Die Überwurfmutter 6 wird auf den Flansch 4 des Wasserhahnes 5 aufgeschraubt, so dass das Flanschelement 1 über den Dichtungsring 3 auf eine Stirnseite des Flansches 4 des Wasserhahnes 5 gedrückt wird. Die Überwurfmutter 6 liegt dabei an einem Anschlag 7 des Flanschelements 1 an.

Eine solche in Fig. 1 gezeigte Ausgestaltung der Verbindungseinrichtung ist sehr empfindlich gegen jegliche auf den Wasserschlauch 2 wirkenden Biegemomente. Wirkt auf den Wasserschlauch 2 ein Biegemoment bzw. eine Kraft quer zur axialen Richtung, so wird dieses Biegemoment unmittelbar auf das Flanschelement 1 übertragen. Eine Zugbelastung auf den Wasserschlauch 2 wirkt somit unmittelbar auf das Flanschelement 1.

Es ist Aufgabe der Erfindung, eine Lösung aufzuzeigen, wie eine Zugentlastung eines Flanschelements einer Verbindungseinrichtung der eingangs genannten Gattung ohne viel Aufwand erreicht werden kann.

Diese Aufgabe wird erfindungsgemäß durch eine Verbindungseinrichtung mit den Merkmalen gemäß Patentanspruch 1, durch eine Wasserleitung mit den Merkmalen gemäß Anspruch 8, wie auch durch ein Hausgerät mit den Merkmalen gemäß Patentanspruch 9 gelöst. Vorteilhafte Ausführungen der Erfindung sind Gegenstand der abhängigen Patentansprüche und der Beschreibung.

Eine erfindungsgemäße Verbindungseinrichtung ist zum Anschließen einer Wasserleitung, insbesondere einer Wasserstopp-Einrichtung (Aquastop), eines Hausgeräts an einem Wasserhahn eines Wassernetzes bzw. einer Hauswasserversorgung ausgebildet. Die Verbindungseinrichtung umfasst ein Flanschelement, an welchem die Wasserleitung fixiert werden kann. Das Flanschelement kann unter Vermittlung einer Dichtung mit dem Wasserhahn verbunden werden. Das Flanschelement weist einen Aufnahmebereich für ein freies Ende der Wasserleitung auf. Die Verbindungseinrichtung umfasst ferner eine Kupplung, vorzugsweise eine Überwurfmutter, welche auf einer Verbindungsseite mit dem Wasserhahn verbindbar, vorzugsweise auf den Wasserhahn aufschraubbar ist, so dass das Flanschelement an dem Wasserhahn festgelegt werden kann. Die Überwurfmutter überragt auf einer der Verbindungsseite abgewandten Seite den Aufnahmebereich des Flanschelements.

Es ist somit erfindungsgemäß vorgesehen, dass in einem montierten Zustand der Wasserleitung an dem Flanschelement die Kupplung bzw. die Überwurfmutter auf einer der Verbindungsseite und somit dem Wasserhahn abgewandten Seite ein freies Ende der Wasserleitung überragt. Also erstreckt sich die Kupplung bzw. die Überwurfmutter über den Aufnahmebereich des Flanschelements hinaus, an welchem das freie Ende der Wasserleitung im montierten Zustand anliegt. Der Aufnahmebereich kann z. B. durch einen Begrenzungsanschlag für das freie Ende der Wasserleitung gebildet sein. Mit der erfindungsgemäßen Verbindungseinrichtung gelingt es, das Flanschelement von auf die Wasserleitung wirkenden Biegemomenten zu entlasten. Die Kupplung bzw. die Überwurfmutter sorgt nämlich aufgrund ihrer Geometrie für eine Zugentlastung des Flanschelements. Aufgrund einer im Vergleich zum Stand der Technik vergrößerten Grifffläche der Kupplung bzw. der Überwurfmutter wird darüber hinaus ein einfacheres Verbinden der Wasserleitung mit dem Wasserhahn ermöglicht. Beispielsweise ist durch die vergrößerte Grifffläche die Aufbringung des zum Aufschrauben der Überwurfmutter auf den Wasserhahn erforderlichen Drehmomentes einfacher und somit wird eine sichere Verbindung des Flanschelements mit dem Wasserhahn ermöglicht. Es wird außerdem durch die großflächige Ausführung der Kupplung bzw. der Überwurfmutter eine optisch ansprechende Verbindungseinrichtung geschaffen; denn das freie Ende der Wasserleitung ist durch die Kupplung bzw. die Überwurfmutter überdeckt.

Die Wasserleitung zum Anschließen des Haushaltgeräts an eine Hauswasserversorgung kann als einzelnes Zubehörteil bereitgestellt sein oder die Wasserleitung kann bereits Bestandteil des Haushaltgeräts sein. Die Wasserleitung kann vorteilhaftenweise die erfindungsgemäße Verbindungseinrichtung an beiden Enden der Wasserleitung vorgesehen sein. In diesem Fall wird die Wasserleitung mit der einen Verbindungseinrichtung an den Wasserhahn der der Hauswasserversorgung und mit der anderen Verbindungseinrichtung an den wasserführenden Anschluss des Haushaltgeräts verbunden.

Das Hausgerät ist vorzugsweise eine Waschmaschine oder eine Spülmaschine.

Es hat sich als besonders vorteilhaft herausgestellt, wenn die Überwurfmutter auf der der Verbindungsseite abgewandten Seite das gesamte Flanschelement überragt. Wirkt nun ein Biegemoment auf die Wasserleitung, so wird dieses auf die Überwurfmutter übertragen, nicht aber auf das Flanschelement. Somit wird eine quasi vollständige Zugentlastung für das Flanschelement erreicht. Eine solche Ausgestaltung der Überwurfmutter sorgt also für eine besonders hohe Stabilität der Verbindungseinrichtung. Bei dieser Ausführungsform erstreckt sich also die Überwurfmutter auf der der Verbindungsseite abgewandten Seite über das Flanschelement hinaus und überdeckt somit das gesamte Flanschelement, an welchem die Wasserleitung fixiert ist.

Die Überwurfmutter kann derart ausgebildet sein, dass sie sich in einem montierten Zustand der Wasserleitung an dem Flanschelement mit ihrem überwiegenden Längenbereich - d. h. mit über 50% ihres Längenbereichs - über der Wasserleitung erstreckt. Dann stellt die Überwurfmutter eine Abstützung für die Wasserleitung dar, nämlich bei Auftreten von Biegemomenten auf die Wasserleitung. Diese Ausführungsform sorgt also ebenfalls für eine besonders stabile Verbindungseinrichtung.

Prinzipiell kann die Überwurfmutter mindestens zwei sich in axialer Richtung erstreckende und zumindest den Aufnahmebereich des Flanschelements überragende Schenkel aufweisen, die dann für die Zugentlastung des Flanschelements sorgen. Es hat sich jedoch als besonders Vorteilhaft erwiesen, wenn die Überwurfmutter den Aufnahmebereich des Flanschelements bzw. das freie Ende der Wasserleitung, und insbesondere das gesamte Flanschelement, vollumfänglich überragt. Dann wird das Flanschelement von jeglichen Biegemomenten entlastet, nämlich unabhängig von der jeweiligen Wirkrichtung der Biegemomente.

Die Überwurfmutter kann sich in axialer Richtung, nämlich von dem Wasserhahn weg, verjüngen. Die Überwurfmutter verjüngt sich bevorzugt linear in axialer Richtung weg vom Wasserhahn. Durch eine solche dünner werdende Überwurfmutter wird eine gute und rutschfeste Aufbringung der Überwurfmutter auf das Gewinde des Wasserhahnes ermöglicht.

Für eine rutschfeste Handhabung der Überwurfmutter kann auch dadurch gesorgt werden, dass die Überwurfmutter an ihrer Oberfläche eine Vielzahl von Noppen und/oder Mulden aufweist. Eine Bedienperson kann dann die Überwurfmutter besonders bequem und sicher handhaben, wie auch Drehmomente beim Aufschrauben der Überwurfmutter auf den Wasserhahn aufbringen.

Eine besonders stabile Ausgestaltung der Verbindungseinrichtung kann dann erreicht werden, wenn die Überwurfmutter aus einem eigensteifen Material, insbesondere aus Kunststoff bereitgestellt ist. Weist die Überwurfmutter Noppen oder dergleichen auf, so können diese ebenfalls aus Kunststoff oder auch aus einem weniger harten Material, z. B. aus Gummi, bereitgestellt sein. Dann ist ein Grundkörper der Überwurfmutter aus einem eigensteifen Material, insbesondere aus Kunststoff, und die Noppen aus Gummi ausgebildet.

Ein erfindungsgemäßes Hausgerät, insbesondere eine Waschmaschine oder eine Spülmaschine, weist eine erfindungsgemäße Verbindungseinrichtung oder eine bevorzugte Ausgestaltung derselben auf.

Die mit Bezug auf die erfindungsgemäße Verbindungseinrichtung vorgestellten bevorzugten Ausführungsformen und deren Vorteile gelten entsprechend für das erfindungsgemäße Hausgerät.

Weitere Vorteile der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels, wie auch unter Bezugnahme auf die beigefügte Zeichnung näher erläutert. Es zeigen:
- Fig. 1: in schematischer Darstellung einen Längsschnitt durch eine Verbindungseinrichtung gemäß dem Stand der Technik; und
- Fig. 2: jeweils in schematischer Teildarstellung einen Längsschnitt durch eine Verbindungseinrichtung gemäß einer Ausführungsform der Erfindung sowie eine Draufsicht auf eine Überwurfmutter der Verbindungseinrichtung.

Fig. 2 zeigt in ihrem oberen Teil einen Längsschnitt durch eine Verbindungseinrichtung 10 gemäß einer Ausführungsform der Erfindung. In ihrem unteren Teil zeigt Fig. 2 eine Überwurfmutter 11 der Verbindungseinrichtung 10. Die Verbindungseinrichtung 10 dient zum Anschließen einer Wasserleitung 12 einer in Fig. 2 nicht dargestellten Wasserstop-Einrichtung (Aquastop) an einen Wasserhahn 13. Die Wasserleitung 12 kann ein aus Gummi oder aus Kunststoff bereitgestellter Wasserschlauch sein.

Die Verbindungseinrichtung 10 umfasst ein Flanschelement 14. Das Flanschelement 14 ist ein Stutzen für die Wasserleitung 12; die Wasserleitung 12 kann an dem Flanschelement 14 fixiert werden. Und zwar kann die Wasserleitung 12 auf das Flanschelement 14 aufgeschoben werden. Das Flanschelement 14 weist hierzu einen sich in axialer Richtung erstreckenden und vollumfänglich als hohler Zylinderkörper ausgebildeten Fortsatz 15 auf, auf welchen die Wasserleitung 12 aufgeschoben ist.

Das Flanschelement 14 weist einen in radialer Richtung nach Außen vollumfänglich abstehenden Vorsprung 16 auf, durch welchen ein Anschlag für ein freies Ende 17 der Wasserleitung 12 gebildet ist. Durch den Vorsprung 16 ist somit ein Aufnahmebereich 18 für das freie Ende 17 der Wasserleitung 12 gebildet. In einem in Fig. 2 gezeigten montierten Zustand der Wasserleitung 12 an dem Flanschelement 14 liegt das freie Ende 17 der Wasserleitung 12 an dem Vorsprung 16 bzw. dem Aufnahmebereich 18 an.

Um eine betriebssichere und rutschfeste Befestigung der Wasserleitung 12 an dem Fortsatz 15 zu gewährleisten, stehen von dem Fortsatz 15 in radialer Richtung drei zahnartige Vorsprünge 32 nach außen ab. Die Vorsprünge 32 ragen in korrespondierende Aufnahmeöffnungen der Wasserleitung 12 hinein. Die Vorsprünge 32 sind derart ausgebildet, dass die Wasserleitung 12 ohne viel Widerstand auf den Fortsatz 15 aufgeschoben werden kann, jedoch mit größerem Widerstand wieder abgezogen werden kann. Dies ist dadurch gewährleistet, dass die Vorsprünge 32 auf einer dem Wasserhahn 13 zugewandten Seite eine quer zur axialen Richtung verlaufende Wandung und auf einer dem Wasserhahn 13 abgewandten Seite jeweils eine Schräge aufweisen.

Die Befestigung der Wasserleitung 12 an dem Fortsatz 15 wird auch durch ein Spannelement 19 verstärkt, dass z.B. aus Metall bereitgestellt werden kann. Das Spannelement 19 ist im Bereich des freien Endes 17 der Wasserleitung 12 angeordnet und umgibt die Wasserleitung 12 vollumfänglich. Das Spannelement 19 kann auch teilweise in die Wand der Wasserleitung 12 integriert sein.

Das Flanschelement 14 wird über einen vollumfänglich ausgebildeten Dichtungsring 20 mit einer Stirnseite 21 eines Flansches 22 des Wasserhahnes 13 verbunden. Und zwar wird das Flanschelement 14 mit Hilfe der Überwurfmutter 11 an die Stirnseite 21 des Flansches 22 des Wasserhahnes 13 gedrückt. Die Überwurfmutter 11 kann nämlich auf den Flansch 22 aufgeschraubt werden; sie weist ein Innengewinde 23 auf, welches auf entsprechendes Außengewinde des Flansches 22 des Wasserhahnes 13 aufgeschraubt werden kann. Beim Aufschrauben der Überwurfmutter 11 auf den Flansch 22 wird auf das Flanschelement 14, nämlich auf seinen Vorsprung 24, Druck von Seiten der Überwurfmutter 11 ausgeübt. Der Dichtungsring 20 wird zwischen der Stirnseite 21 des Flansches 22 und dem Vorsprung 24 zusammengedrückt, so dass eine Dichtwirkung gegeben ist. Dabei drückt die Überwurfmutter 11 den Vorsprung 24 des Flanschelements 14 mit einer Nase 25.

Für eine gegenseitige Stabilität der Überwurfmutter 11 und des Flanschelements 14 sorgt eine vom Vorsprung 16 des Flanschelements 14 in radialer Richtung abstehende und z. B. aus Gummi bereitgestellte Lippe 31. Die Lippe 31 kann das Flanschelement 14 voll umfänglich umgeben. Die Lippe 31 gleitet an einer Innenwand der Überwurfmutter 11. Die Überwurfmutter 11 wird auf den Wasserhahn 13 auf einer Verbindungsseite 26 aufgeschraubt. Auf einer der Verbindungsseite 26 abgewandten Seite 27 überragt die Überwurfmutter 11 nicht nur den Aufnahmebereich 18, sondern auch das gesamte Flanschelement 14 und erstreckt sich auf der Seite 27 in axialer Richtung noch über das Flanschelement 14 hinaus. Ein überwiegender Längenbereich - etwa 75% der Länge - der Überwurfmutter 11 erstreckt sich über der Wasserleitung 12 und überdeckt sie. Etwa 40% des Längenbereichs der Überwurfmutter 11 ragt über das Flanschelement 14 in axialer Richtung hinaus. Durch eine solche Ausgestaltung der Verbindungseinrichtung 10 wird erreicht, dass auf die Wasserleitung 12 wirkende Biegemomente nicht auf das Flanschelement 14 übertragen sondern von der instabilen und an dem Wasserhahn 13 festgelegten Überwurfmutter 11 aufgefangen werden. Es wird somit die Gefahr des Abziehens der Wasserleitung 12 aus dem Flanschelement 14 auf ein Minimum reduziert. Bei jeglichen, auf die Wasserleitung 12 wirkenden Biegemomenten stützt sich die Wasserleitung 12 nämlich an der Überwurfmutter 11 ab, so dass eine Zugentlastung für das Flanschelement 14 ermöglicht wird.

An ihrer äußeren Oberfläche kann die Überwurfmutter 11 eine Vielzahl von Noppen und/oder Mulden 28 aufweisen. Die Noppen 28 können z.B. aus Gummi ausgebildet sein, so dass eine rutschfeste und sichere Handhabung der Überwurfmutter 11 gewährleistet ist. Dann ist die Überwurfmutter 11 vorzugsweise aus Kunststoff und die Noppen 28 aus Gummi ausgebildet.

Ferner ist die Überwurfmutter 11 in axialer Richtung verjüngt ausgebildet, sie wird dünner in axialer Richtung weg vom Wasserhahn 13. Dies ermöglicht ebenfalls eine rutschfeste Aufbringung der Überwurfmutter 11 auf den Flansch 22 des Wasserhahnes 13.

Das Flanschelement 14 ist bevorzugt aus einem harten Material, insbesondere eigensteif, ausgebildet. Z.B. kann das Flanschelement 14 aus Kunststoff bereitgestellt sein.

Die Verbindungseinrichtung 10 kann darüber hinaus einen Sieb 29 aufweisen, der an einer Nase 30 des Dichtungsringes 20 in axialer Richtung abgestützt sein kann. Ergänzend oder alternativ kann die Verbindungseinrichtung 11 an dieser Stelle ein Rückschlagventil aufweisen, welches einen Wasserfluss vom Hausgerät zum Wasserhahn 13 blockiert.

Insgesamt wird also eine Verbindungseinrichtung 10 geschaffen, bei welcher biegeempfindliche Teile durch die Überwurfmutter 11 aufgrund ihrer Geometrie abgedeckt werden. Die Überwurfmutter 11 weist nämlich eine solche Länge auf, dass sie das gesamte Flanschelement 14 überragt und sich weit über das Flanschelement 14 in axialer Richtung erstreckt. Dies sorgt für eine besonders stabile Verbindungseinrichtung 10.

### Bezugszeichenliste

- 10: Verbindungseinrichtung
- 11: Überwurfmutter
- 12: Wasserleitung
- 13: Wasserhahn
- 14: Flanschelement
- 15: Fortsatz
- 16: Vorsprung
- 17: Ende
- 18: Aufnahmebereich
- 19: Spannelement
- 20: Dichtungsring
- 21: Stirnseite
- 22: Flansch
- 23: Innengewinde
- 24: Vorsprung
- 25: Nase
- 26: Verbindungsseite
- 27: Seite
- 28: Noppen und/oder Mulden
- 29: Sieb
- 30: Nase
- 31: Lippe
- 32: Vorsprünge

## Patentansprüche

1. Verbindungseinrichtung (10) zum Anschließen einer Wasserleitung (12), insbesondere einer Wasserstopp-Einrichtung, eines Hausgeräts an einen Wasserhahn (13), mit einem an der Wasserleitung (12) fixierbaren Flanschelement (14), welches unter Vermittlung einer Dichtung (20) mit dem Wasserhahn (13) verbindbar ist und welches einen Aufnahmebereich (18) für ein freies Ende (17) der Wasserleitung (12) aufweist, und mit einer Kupplung, insbesondere einer Überwurfmutter (11), welche auf einer Verbindungsseite (26) mit dem Wasserhahn (13) verbindbar, vorzugsweise auf den Wasserhahn aufschraubbar, ist und mittels welcher das Flanschelement (14) an dem Wasserhahn (13) festlegbar ist, **dadurch gekennzeichnet, dass** die Überwurfmutter (11) auf einer der Verbindungsseite (26) abgewandten Seite (27) den Aufnahmebereich (18) des Flanschelements (14) überragt.

2. Verbindungseinrichtung (10) nach Anspruch 1, **dadurch gekennzeichnet, dass** die Kupplung (11) auf der der Verbindungsseite (26) abgewandten Seite (27) das gesamte Flanschelements (14) überragt.

3. Verbindungseinrichtung (10) nach Anspruch 1 oder 2, **dadurch gekennzeichnet, dass** in einem montierten Zustand der Wasserleitung (12) an dem Flanschelement (14) die Kupplung (11) sich mit ihrem überwiegenden Längenbereich über der Wasserleitung (12) erstreckt.

4. Verbindungseinrichtung (10) nach einem der vorhergehenden Ansprüche, **dadurch gekennzeichnet, dass** die Kupplung (11) den Aufnahmebereich (18) des Flanschelements (14) vollumfänglich überragt.

5. Verbindungseinrichtung (10) nach einem der vorhergehenden Ansprüche, **dadurch gekennzeichnet, dass** die Kupplung (11) in axialer Richtung verjüngt ausgebildet ist.

6. Verbindungseinrichtung (10) nach einem der vorhergehenden Ansprüche, **dadurch gekennzeichnet, dass** die Kupplung (11) aus einem eigensteifen Material, insbesondere aus Kunststoff, bereitgestellt ist.

7. Verbindungseinrichtung (10) nach einem der vorhergehenden Ansprüche, **dadurch gekennzeichnet, dass** die Kupplung (11) an ihrer Oberfläche eine Vielzahl von Noppen und/oder Mulden (28) aufweist.

8. Wasserleitung (12) zum Anschließen eines Haushaltgeräts an eine Hauswasserversorgung, insbesondere an einen Wasserhahn (13), **dadurch gekennzeichnet, dass** die Wasserleitung (12) zumindest eine Verbindungseinrichtung (10) nach einem der vorhergehenden Ansprüche aufweist.

9. Hausgerät mit einer Verbindungseinrichtung (10) nach einem der Ansprüche 1 bis 7 oder mit einer Wasserleitung (12) nach Anspruch 8.
